# EUROPEAN PATENT APPLICATION

(11) **EP 4 283 460 A1**
(43) Date of publication of application: **29.11.2023**
(21) Application number: 23160317.6
(22) Date of filing: 07.03.2023
(51) Int. Cl.: G06F 8/61, G06F 8/36, B25J 9/00, B25J 9/16

(54) **MANAGEMENT SYSTEM AND METHOD TO SUPPORT INTERWORKING WITH THIRD-PARTY PRODUCTS WHILE ALLOWING ADDITION AND DELETION OF FUNCTION MODULES**

(30) Priority: 04.04.2022 KR 20220041746
(71) Applicant: DOOSAN ROBOTICS INC, Gyeonggi-do 16648 (KR)
(72) Inventor: LEE, Jae Suk, 16648 Suwon-si (Gyeonggi-do) (KR)
(74) Representative: Cabinet Laurent & Charras

(57) **Abstract**

Disclosed herein is a management system that includes a market server having a function module registered therein to assign a specific function to hardware and a manager configured to download the function module from the market server, wherein the manager installs or deletes the function module in or from the controller.

## Description

### CROSS-REFERENCE TO RELATED APPLICATION

This application claims priority to Korean Patent Application No. 10-2022-0041746, filed on April 04, 2022 in the Korean Intellectual Property Office, the disclosure of which is incorporated herein by reference in its entirety.

### BACKGROUND

### Technical Field

The present disclosure relates to a system and method for managing hardware such as a robot.

### Description of the Related Art

Hardware, such as robots or autonomous mobile robots (AMRs), is widely used in a variety of applications.

However, different types of hardware are limited in function and operation by their manufacturers. As a result, all types of hardware are applied only to limited task environments and are managed only by experienced personnel

This causes a delay in popularization of various types of hardware.

This causes a delay in popularization of various types of hardware.

### SUMMARY

Accordingly, the present disclosure is directed to a management system and method to support interworking with third-party products while allowing addition and deletion of function modules that substantially obviate one or more problems due to limitations and disadvantages of the related art.

An object of the present disclosure is to provide a management system capable of adding or deleting various function modules to or from a controller for controlling hardware such as a robot while interworking with hardware of multiple manufacturers.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the accompanying drawings.

In accordance with an aspect of the present disclosure, there is provided a management system that includes, when there is provided a controller configured to control hardware, a market server having a function module registered therein to assign a specific function to the hardware, and a manager configured to download the function module from the market server. The manager may install or delete the function module in or from the controller.

In accordance with another aspect of the present disclosure, there is provided a management system that includes a registration unit configured to register a function module that assigns a specific function to hardware, and a provision unit configured to provide a manager with module information of a pre-registered function module.

The provision unit may provide the manager with a display menu that displays the module information in a tiled menu structure.

When a specific tile forming the tiled menu is selected, the provision unit may further provide the manager with at least one of a function classification result and detailed information of a specific function module disposed on the selected specific tile.

A collection unit may be provided to collect information of a second extension application programming interface (API) installed in the manager.

A search unit may be provided to search for second function modules each having a second dynamic linking library using the second extension API from among a plurality of pre-registered function modules.

The provision unit may provide the manager with a list of the second function modules searched for by the search unit.

A collection unit may be provided to collect information of a first extension application programming interface (API) installed in a controller managed by the manager.

A search unit may be provided to search for first function modules each having a first dynamic linking library using the first extension API from among a plurality of pre-registered function modules.

The provision unit may provide the manager with a list of the first function modules searched for by the search unit.

An evaluation unit may be provided to assign a score to the function module using at least one of a customer evaluation score, the number of downloads, and process convenience for the function module.

If there are a plurality of types of module information provided to the controller, the provision unit may determine a priority based on the score assigned to each function module.

The provision unit may provide the manager with the plurality of types of module information arranged in order according to the priority.

A collection unit may be provided to collect installation information of a specific function module installed in the manager.

An update unit may be provided to update the specific function module by comparing the installation information with the module information of the pre-registered function module.

In accordance with still another aspect of the present disclosure, there is provided a management system that includes a first execution unit equipped with function modules, each of which assigns a specific function to hardware, and configured to control the hardware by executing the function module, and a first management unit configured to manage a variable change module among the function modules installed in the first execution unit.

The function module installed in the first execution unit may be divided into the change module and a fixed module fixedly installed in the first execution unit.

The first management unit may add or delete the change module with the fixed module kept as it is.

The fixed module may include at least one of a first communication module in communication with a manager or a market server, an analysis module configured to interpret control information of the hardware, and a conversion module configured to convert the control information interpreted by the analysis module to be compatible with the hardware.

The change module may include at least one of a control module configured to generate the control information and a framework module connecting the control module to a screen module including a user interface.

There may be provided a first communication module in communication with a manager or a market server, an analysis module configured to interpret control information of the hardware, and a conversion module configured to convert the control information interpreted by the analysis module to be compatible with the hardware.

The first management unit may add or delete another function module to or from the first execution unit in a state in which the first communication module, the analysis module, and the conversion module are kept as they are.

The first execution unit may be additionally equipped with at least one of a first operating system (OS), a robot operating system (OS), and a real-time operating system (RTOS) configured to provide real-time to the first OS or the robot OS.

The first execution unit may be additionally equipped with at least one of a first runtime module corresponding to an execution environment of the function module and a first application program interface (API) connecting the function module to the first runtime module.

The first execution unit may be equipped with a first communication module, an analysis module, a conversion module, a control module, a framework module, a first runtime module, a first application program interface (API), a first extension API, and a first dynamic linking library.

The first management unit may add or delete the first extension API or the first dynamic linking library, which is distinguished from the control module and the framework module, to or from the first execution unit.

The first communication module may communicate with a manager or a market server.

The analysis module may interpret control information of the hardware.

The conversion module may convert the control information interpreted by the analysis module to be compatible with the hardware.

The control module may generate the control information.

The framework module may connect the control module to a screen module including a user interface.

The first runtime module may provide an execution environment of the function module.

The first API may connect the function module to the first runtime module.

The first dynamic linking library may be produced for the purpose of controlling the hardware by the manufacturer of the hardware.

The first extension API may connect the first dynamic linking library to the first runtime module.

The function module may include a screen module, a framework module, and a control module.

The screen module may include a user interface.

The control module may include control information for controlling the hardware to have the specific function.

The framework module may include information for interworking the screen module with the control module.

The first management unit may install, in the first execution unit, the framework module and the control module among the screen module, the framework module, and the control module.

A first communication module may be provided to communicate with a manager for displaying a user interface of the functional module.

The first communication module may receive, from the manager, a control module configured to generate control information of the hardware that allows the hardware to have the specific function, and a framework module for interworking the control module with the user interface.

The first management unit may install, in the first execution unit, the control module and the framework module received through the first communication module.

The manager may include a second execution unit and a second management unit.

The second management unit may distinguish a screen module, the framework module, and the control module included in the function module downloaded from a market server.

The second execution unit may be equipped with a second communication module in communication with the first communication module and the screen module extracted by the second management unit.

The second management unit may transmit the control module and the framework module to the first management unit through the second communication module.

The first management unit may install, in the first execution unit, the control module and the framework module received from the second management unit.

The screen module may display, on a display unit of the manager, the user interface interworking with the control module by the framework module.

The first and second communication modules may exchange interworking information between the user interface and the control module.

The first and second communication modules may be formed integrally.

The first and second execution units may be formed integrally.

The first and second management units may be are formed integrally.

In accordance with yet another aspect of the present disclosure, there is provided a management system that includes a second management unit configured to acquire function modules, each of which assigns a specific function to hardware, a second execution unit configured to display a user interface indicative of the specific function among the function modules, and a display unit on which the user interface is displayed.

The second execution unit may be equipped with a second operating system (OS), a second runtime module corresponding to an execution environment of the function module, and a second application program interface (API) connecting the function module to the second runtime module.

The second management unit may extract, from the function module, a screen module providing the user interface.

The second management unit may install or delete the screen module in or from the second execution unit in a state in which the second OS, the second runtime module, and the second API are kept as they are.

The second management unit may divide the function module into a first module and a second module.

The second module may include at least one of a screen module including the user interface, a simulation module configured to generate a simulation environment of the hardware, a meta module connecting the screen module to the simulation module, a teaching module configured to generate teaching information of the hardware, and a spatial matching module configured to provide augmented reality.

The first module may include at least one of a control module configured to process control information for controlling the hardware to have the specific function and a framework module including information for interworking the screen module with the control module.

The second management unit may provide the first module to a controller of the hardware.

The second management unit may install or delete the second module in or from the second execution unit.

The second management unit may extract, from the function module, a screen module having the user interface.

The second management unit may install the screen module in the second execution unit.

The second execution unit may display the user interface on the display unit by executing the screen module installed by the second management unit.

The second execution unit may be equipped with a second communication module in communication with a controller for controlling the hardware.

The second communication module may exchange interworking information between the hardware and the user interface with the controller.

The function module may include a screen module, a framework module, and a control module, in which case the second management unit may extract the screen module from the function module.

The second management unit may install, in the second execution unit, the screen module extracted from the function module.

The second management unit may extract the framework module and the control module from the function module.

The second management unit may provide the framework module and the control module to a controller configured to control the hardware.

The second execution unit may be equipped with a second communication module, a screen module, a second runtime module, a second application program interface (API), a second extension API, and a second dynamic linking library.

The second management unit may add or delete the second extension API or the second dynamic linking library, which is distinguished from the screen module, to or from the second execution unit.

The second communication module may communicate with a controller or a market server.

When the screen module is executed by the second execution unit, the user interface may be displayed on the display unit.

The second runtime module may provide an execution environment of the function module.

The second API may connect the function module to the second runtime module.

The second dynamic linking library may be produced for the purpose of controlling the hardware by the manufacturer of the hardware.

The second extension API may connect the second dynamic linking library to the second runtime module.

In accordance with still yet another aspect of the present disclosure, there is provided a management system that includes a manager configured to display a user interface for controlling hardware.

The manager may extract a screen module and a control module from a function module acquired from a market server.

The manager may install the screen module on a second API with the self-contained second API kept as it is.

The manager may transmit to a controller, the control module to be installed on a first API that is pre-installed in the controller for the hardware.

In accordance with a further aspect of the present disclosure, there is provided a management method that includes acquiring a function module from a market server, extracting a screen module and a control module included in the function module, installing the screen module on a pre-installed second API, and transmitting, to a controller, the control module to be installed on a first API that is pre-installed in the controller for hardware.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a schematic diagram illustrating a management system according to the present disclosure;
FIG. 2 is a schematic diagram illustrating a market server;
FIG. 3 is a schematic diagram illustrating a display menu displayed on a manager;
FIG. 4 is a schematic diagram illustrating a controller;
FIG. 5 is a schematic diagram illustrating a software structure installed in the controller;
FIG. 6 is a schematic view illustrating the manager;
FIG. 7 is a schematic diagram illustrating a software structure installed in the manager;
FIG. 8 is a schematic diagram illustrating an example of a user interface displayed through a display unit;
FIG. 9 is a schematic diagram illustrating an operation of the management system according to the present disclosure;
FIG. 10 is a schematic diagram illustrating a work area between a hardware manufacturer and a function module manufacturer in an environment to which the management system of the present disclosure is applied;
FIG. 11 is a schematic diagram illustrating an operation in a comparative example;
FIG. 12 is a schematic diagram illustrating a work area of a hardware manufacturer in an environment in the comparative example;
FIG. 13 is a schematic diagram illustrating a software structure in the comparative example;
FIG. 14 is a flowchart illustrating a management method according to the present disclosure;
FIG. 15 is a flowchart illustrating an installation process of a function module;
FIG. 16 is a flowchart illustrating a deletion process of the function module; and
FIG. 17 is a diagram illustrating a computing system according to an embodiment of the present disclosure.

### DETAILED DESCRIPTION OF EMBODIMENTS

Exemplary embodiments of the present disclosure will be described below in detail with reference to the accompanying drawings so as to be easily realized by those skilled in the art to which the present disclosure pertains. The present disclosure may, however, be embodied in different forms and should not be construed as limited to the embodiments set forth herein. In order to clearly illustrate the present disclosure in the drawings, parts irrelevant to the description may be omitted in the drawings, and like reference numerals refer to like elements throughout the specification.

In the specification, redundant descriptions of the same components will be omitted.

It will be understood that when an element is referred to as being "coupled" or "connected" to another element, it can be directly coupled or connected to the other element or intervening elements may also be present. On the other hand, it will be understood that when an element is referred to as being "directly coupled" or "directly connected" to another element, there are no intervening elements present.

The terminology used herein is for the purpose of describing particular embodiments only and is not intended to limit the present disclosure.

As used herein, the singular forms "a", "an" and "the" are intended to include the plural forms as well, unless the context clearly indicates otherwise.

It will be further understood that the terms "comprises", "includes", and/or "have/has", when used in this specification, specify the presence of stated features, integers, steps, operations, components, parts, and/or combinations thereof, but do not preclude the presence or addition of one or more other features, integers, steps, operations, components, parts, and/or combinations thereof.

As used herein, the term "and/or" includes any and all combinations of one or more of the associated listed items. In the specification, the expression "A or B" may include "A", "B", or "both A and B".

In certain embodiments, a detailed description of functions and configurations well known in the art may be omitted to avoid obscuring appreciation of the disclosure by those skilled in the art.

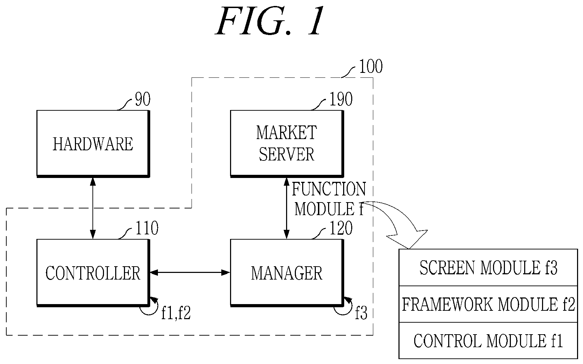

FIG. 1 is a schematic diagram illustrating a management system 100 according to the present disclosure.

Referring to FIG. 1, the management system 100 may include a controller 110, a manager 120, and a market server 190.

The controller 110 may control hardware 90. The hardware 90 may include a robot, an autonomous mobile robot (AMR), and the like, which are controlled by control information or control signals provided from the controller 110.

The controller 110 may be a combination of software, such as a control program, and a processing unit on which the software is executed. As an example, the controller 110 may correspond to a processing unit equipped with an executable control program for generating control information of a robot.

The market server 190 may have a function module f (including a control module f1, a framework module f2, etc.) registered therein to assign a specific function to the hardware 90. The function module f may determine at least one of the method and order of operation of the hardware 90. The "module" as used herein may refer to a program itself that performs a specific function, or may refer to a processor, a calculator, a semiconductor chip, or the like that has a program installed therein to perform a specific function by executing or calculating the program. The function module f may include a module that assigns a specific function to hardware (a unit or an electronic device), such as a robot or an AMR, controlled by software, or a module that provides a convenient function to a user.

Even in the same hardware 90, the hardware 90 may have various functions depending on the controller 110 that controls the hardware 90.

As an example, when the controller 110 provides control information to pick up or transport an object, the robot corresponding to the hardware 90 may have a capability to transport an object. When the controller 110 provides information necessary for welding, the robot may have a capability to weld an object. Of course, in terms of hardware depending on the capability, it may be premised that hardware end effectors, such as grippers or manipulators, installed in the robot are replaced with elements such as welders.

The market server 190 may have a function module registered therein to control the robot to have a capability to transport an object. The market server 190 may also have a function module registered therein to control the robot to have a capability to weld an object.

In this case, the function module f may include a program, software, or the like for controlling the hardware 90 such as the robot to perform a specific function (e.g., transporting or welding). From a different point of view, the function module f may generate control information necessary for the hardware 90 to perform a specific function.

In order to assign a specific function to the robot, it is necessary to download a function module, which allows the robot to perform the function, from the market server 190 and install the downloaded function module to the controller 110. To this end, the manager 120 may be used. The manager may have a screen module installed therein to constitute the downloaded function module. The controller may have a framework module and a control module installed therein to constitute the downloaded function module. The control module may control the hardware.

The manager 120 may install or delete the function module in or from the controller 110. The manager 120 may include a personal computer, a desktop computer, a smartphone, a tablet PC, a hardware-only controller, and the like.

Although the manager 120 seems to be easy at first glance to manage, for example install or delete, the function module, it is noted that this is difficult to achieve easily in reality.

In general, the manufacturer of the hardware 90 may offer a customer with a basic program for controlling the hardware 90. However, the basic program has a structure that makes it difficult to separate function modules. In other words, it is clear that the basic program includes a program code that allows a module such as the function module f to perform a specific function. However, it is very difficult to delete the function module from the basic program or add a new function module to the basic program. This is because the basic program generally provided by the manufacturer has a structure in which it has no separable function module itself, for example, a structure in which a specific function is fused across the basic program.

Hence, a customer with existing hardware 90 may need to purchase hardware 90 having a new function if he/she needs that function. Alternatively, the customer may request that the manufacturer of the hardware 90 add or update a new function.

Even if the manufacturer actively accepts the customer's request, it may be time-consuming to update the new function. This is because it is necessary to modify or update the basic program, including a robot OS, a runtime, etc., along with a function-related code in order to add the new function. If the basic program that incorporates the robot OS, the runtime, and the function-related code is used to control hardware, there is no way for other companies to extend the function of the hardware. From a different point of view, it is a reality that adding a welding function to a robot with no that function is able to only be performed by the manufacturer of the robot.

In addition, if the basic program is generally modified during the update of the function, it may be difficult to control an error in the software due to a variety of new bugs.

As a result, it is practically difficult to newly add a specific function different from the existing function to the hardware 90. It is also practically difficult to delete the existing function that is subject to the addition of a new function.

In order to add new functions to different types of hardware 90, it is necessary to separate function-related parts and codes from the basic program. For this purpose, the management system 100 of the present disclosure proposes a newly structured function module f.

As an example, the function module f of the present disclosure may include at least one of a control module f1, a framework module f2, and a screen module f3. Preferably, the function module f should include all of the control module f1, the framework module f2, and the screen module f3. The control module f1, the framework module f2, and the screen module f3 may take the form of programs or software.

In order to implement the function of the hardware 90 performing a specific task, the control module f1 may control the hardware 90 to perform the task. As a result, the control module f1 may generate control information of the hardware 90 or output control information to the hardware 90 as a target.

The screen module f3 may visually display a control operation of the hardware 90 on a display unit 125. The customer may recognize the operation and/or status of the hardware 90 through the display unit 125. Alternatively, the screen module f3 may receive a control value from the customer and transmit it to the control module.

The framework module f2 may connect the control module f1 to the screen module f3.

The framework module f2 may include a software environment that provides the design and implementation of parts corresponding to the functions of the control module f1 and the screen module f3 in a collaborative form to be reused. In other words, the control module and the screen module may perform their respective functions using the same framework module.

The control module f1 and the screen module f3 may interwork with each other through the framework module f2.

As an example, when the customer moves a robot in a virtual three-dimensional (3D) space displayed on the display unit 125, it may be advantageous for an actual robot to move in response to that movement. In this case, the movement of the robot on the display unit 125 should be converted into various control values (a change in joint angle, a change in angular velocity, etc.) that are required to move the actual robot. This conversion may be performed in the framework module or the control module. When the conversion is performed in the control module, the framework module may convert the format of information transmitted from the screen module into a format required by the control module.

It is recommended that the reverse operation is performed normally as well. It may be preferable that the movement of the robot performing the setting task be displayed in real time in a virtual 3D space on the display unit 125. To this end, the movement of the actual robot needs to be converted into a coordinate value in the virtual 3D space, which may be performed by the framework module or the control module. When the conversion is performed in the control module, the framework module may convert the format of information transmitted from the control module into a format required by the screen module.

Practically, the framework module may include a number of different components that enable solution development, such as a support program, a compiler, an interpreter library, a code library, and a tool set, which commonly used in the screen module and control module. The screen module and the control module, which use common components, may exchange compatible information with each other. Accordingly, the framework module may be treated as converting heterogeneous information between the screen module and the control module.

The function module f, which includes all of the control module f1, framework module f2, and screen module f3, has all the elements that assign a specific function to the robot, except for a basic element such as a runtime or an operating system (OS) that corresponds to the execution environment. Assigning a specific function may mean that control information for achieving a specific function is provided to the hardware 90, or that the function module f for outputting control information is installed in the manager or controller for hardware such as a robot, an AMR, or a manipulator.

According to the present disclosure, the function module may be separated from the basic element such as the controller 110 or the OS of the manager 120. Accordingly, when the characteristic information of the hardware 90 is provided from the manufacturer of the hardware 90, not only the manufacturer of the hardware 90 but also various companies may manufacture the function module.

The function module f produced by various companies may be registered in the market server 190.

The customer may access the market server 190 using the display unit 125 and the input unit of the manager 120, and may download from the market server 190 a function module that provides a necessary function.

The display unit 125 may include various displays on which different types of information is visually displayed. The input unit may include a keyboard, a mouse, or a touch screen for receiving customer information.

The manager 120 may extract the screen module, the framework module, and the control module by analyzing the function module.

The manager 120 may install the extracted screen module f3 therein by itself. This allows the manager 120 to provide an environment for monitoring the newly downloaded function module.

The manager 120 may transmit the extracted framework module f2 and control module f1 to the controller 110. If the previous framework module and control module already installed in the controller 110 conflict with the new framework module f2 and the new control module f1, the manager 120 may delete the previous framework module and control module from the controller 110 or may request that the controller 110 delete those modules. In general, a newly added function is highly likely to conflict with the existing function since it often corresponds one-to-one to a hardware element. Therefore, it is preferable that the existing function module be deleted when the new function module is installed. Since some functions may not be related to hardware, it is noted once again that an even newly added function may not necessarily correspond one-to-one to hardware.

In the manager 120 or the controller 110, the framework module f2 and the control module f1 transmitted to the controller 110 by the manager 120 may be installed in the controller 110.

Through the above process, the task environment of the hardware 90 having the new function and the task environment for monitoring the hardware 90 in terms of the new function may be completed.

Meanwhile, the manager 120 and the controller 110 may be formed integrally with each other. In this case, the display unit 125 and the input unit may also be formed integrally with the controller 110 for the hardware 90.

According to the management system 100 of the present disclosure, if a newly added function is abnormal, this issue may be solved only by correcting the error present in the function module. In addition, each company does not need to develop any kind of software including an OS, a runtime, etc., related to the control of the hardware 90, but is sufficient to develop only a function module. Therefore, each company is able to put all of its energy into the development of the function module, which can improve the quality and error rate of the function module.

Meanwhile, if the function module is produced to be separable from the basic element such as the OS, runtime, or API of the controller, a new function may be added and deleted and various companies may participate in the production of the function module.

However, the type and expression of information represented by the function module separated from the basic element may be different from the type and expression of information handled by the basic element. In order to solve this issue, the controller 110 may be additionally equipped with an analysis module and a conversion module.

For example, the analysis module may obtain, from the control module, control information to move the end effector of the articulated robot by 10 cm in the y-axis direction.

The analysis module may calculate an angle of rotation, direction of rotation, and the like of the robot arm required for the end effector to move by 10 cm in the y-axis direction. In other words, the analysis module may calculate specific operation information of the robot required to execute the obtained control information. The operation information, such as the angle of rotation and the movement, calculated by the analysis module may be referred to as "interpreted control information" by the analysis module. The interpreted control information may be provided to the conversion module.

The conversion module may convert the interpreted control information into a data format input by the robot (hardware) of each manufacturer, and may provide it to the robot. The robot may rotate its arm in response to the data received from the conversion module 15, and the end effector mounted at the end of the robot arm may move by 10 cm in the y-axis direction due to the rotation.

According to the above analysis module and conversion module, the manufacturer of the function module does not need to know in which direction and by what angle the robot arm should be rotated to move the end effector by 10 cm in the y-axis direction. However, it is sufficient for each company to produce a control module that generates final control information, for example, information to move the end effector by 10 cm in the y-axis direction, a framework module and a screen module related thereto.

Hereinafter, the market server 190, the controller 110, and the manager 120 will be described in detail.

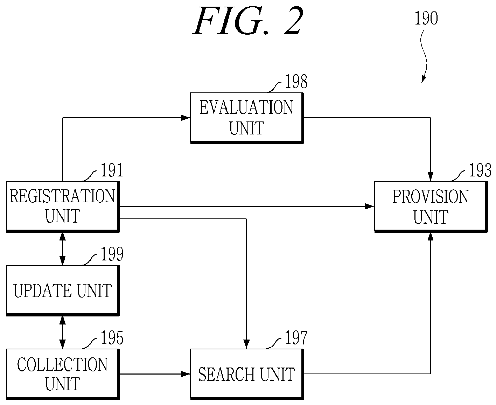

FIG. 2 is a schematic diagram illustrating the market server 190.

The market server 190 may be referred to as a "management device" in terms of managing the registration and distribution of function modules produced by each company.

The market server 190 may include a registration unit 191, a provision unit 193, a collection unit 195, a search unit 197, an evaluation unit 198, and an update unit 199.

The registration unit 191 may register a function module f that assigns a specific function to the hardware 90.

As an example, the registration unit 191 may check whether the company logging into the market server 190 is a user who has the authority to register the function module f.

If the integrity of the company is verified, the registration unit 191 may provide the company with an authority to register the function module f in the registration unit 191.

The company may produce a function module based on the characteristic information of the hardware 90 disclosed by the manufacturer of the hardware 90, the OS provided by the manufacturer, the runtime module, the application program interface (API), and the like. Alternatively, the company may produce a function module according to the guideline presented by the manufacturer of the hardware 90. For example, the company may produce a function module f having a control module f1, a framework module f2, and a screen module f3.

The function module f may be registered by the registration unit 191 and disclosed to customers of the hardware 90.

The provision unit 193 may provide module information of the pre-registered function module to the manager 120.

A plurality of function modules may be registered in the registration unit 191. The customer needs to select a function module that provides a desired function from among the plurality of function modules registered in the registration unit 191.

Instead of providing the function module itself to the manager 120, the provision unit 193 may provide the manager 120 with module information corresponding to the information of the function module, which is selectable by the customer.

The module information may include at least one of function module identification information, hardware identification information supported by the function module, function information provided by the function module, and task information applicable by the function module.

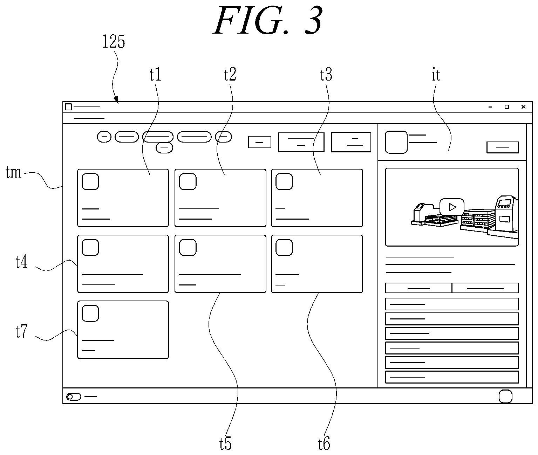

FIG. 3 is a schematic diagram illustrating a display menu displayed on the manager.

The provision unit 193 may provide module information in various display formats.

As an example, the provision unit 193 may provide the manager 120 with a display menu tm that displays the module information in a tiled menu structure. The manager may display the display menu tm through the display unit 125.

When a specific tile forming the tiled menu is selected, the provision unit 193 may further provide the manager 120 with at least one of a function classification result (function information classification provided by the function module) and detailed information of the specific function module disposed on the selected specific tile. The detailed information may include task information applicable by the function module, a detailed method and order of operation of the function module, and the like.

In the display menu tm of FIG. 3, seven function modules are displayed as the result searched for by the customer. Each of the seven function modules may have a thumbnail that includes a tile in the form of a closed curve such as a square.

When the customer selects a first tile t1 from among the seven tiles 11, t2, t3, t4, t5, t6, and t7 displayed through the display menu tm, detailed information of the first tile t1 may be displayed on the display menu tm. The display menu tm may be provided with a detailed menu it that displays the detailed information of the function module indicated by the tile selected by the customer.

The collection unit 195 may collect information of a second extension application programming interface (API) 26 installed in the manager 120.

The API refers to a language or message format used for communication between an operating system (OS) and an application program. The API is implemented by calling a function that provides a connection to a specific subroutine for execution within a program. Therefore, one API may have several program modules or routines that already exist or need to be connected so as to perform the task requested by the function call.

The extension API may be an addition of deficient elements to the basically installed API. The extension API may be produced by the manufacturer of the function module or the manufacturer of the hardware 90.

The search unit 197 may search for a second function module having a second dynamic linking library 20 using the second extension API 26 from among the plurality of pre-registered function modules.

The dynamic linking library is a function inherent in an operating system, and may be a file for use by dividing software routines (a series of instructions provided to allow a computer to perform a specific function) into several files on a disk and loading only necessary ones into an execution memory.

Functions other than those provided by the platform (API, runtime, or library) may be required for the normal operation of the function module. The software function required by the function module may be provided through the dynamic linking library and the extension API.

For example, a conversion module 15 that will be described later requires an ROS package, which is a conversion dynamic linking library.

The conversion module 15 may convert the control operations interpreted by the analysis module 13 into a third-party hardware instruction through the conversion dynamic linking library and the extension API. This allows different types of hardware to be controlled by any manufacturer.

The provision unit 193 may provide the manager 120 with a list of second function modules searched for by the search unit 197.

According to the search unit 197 and the provision unit 193, it is possible to search for the second function module having the second dynamic linking library 20 using the second extension API 26 and to provide the result of search to the customer through the manager 120.

According to the present embodiment, at least a list of function modules, which are executable by the manager 120, among the plurality of function modules may be provided to the customer.

It is preferable to select the function module executable by the controller 110 as well as the manager 120.

To this end, the collection unit 195 may collect information of a first extension application programming interface (API) 16 installed in the controller 110 managed by the manager 120. The collected information of the first extension API 16 may be used to find an executable function module using the first extension API 16.

Specifically, the search unit 197 may search for a first function module having a first dynamic linking library 10 using the first extension API 16 from among the plurality of pre-registered function modules.

The provision unit 193 may provide the manager 120 with a list of first function modules searched for by the search unit 197.

According to the search unit 197 and the provision unit 193, it is possible to search for the first function module having the first dynamic linking library 10 using the first extension API 16 and to provide the result of search to the customer through the manager 120. The first function module may correspond to at least a function module executable by the controller 110.

The function module may include a control module and framework module installed in the controller 110, and a screen module installed in the manager 120 as a set. Therefore, in most cases, in order for the function module to operate normally, it is necessary to satisfy both the requirements of the first function module and the second function module. In other words, it is preferable that the function module have the first dynamic linking library 10 and the second dynamic linking library 20 together.

It is difficult for the customer to individually test the performance, reliability, convenience, bugs, etc., of the plurality of function modules registered in the market server 190. The evaluation unit 198 may be used in consideration of this reality.

The evaluation unit 198 may use at least one of a customer evaluation score, the number of downloads, and process convenience for the function module to assign a score to the function module.

If there are a plurality of types of module information provided to the controller 110, the provision unit 193 may determine a priority based on the score assigned to each function module.

The provision unit 193 may provide the manager 120 with the plurality of types of module information arranged in order according to the priority.

According to the present embodiment, the customer may receive ranking information of the function module that is used satisfactorily by other customers.

The collection unit 195 may collect installation information of the specific function module that is pre-installed in the manager 120.

In this case, the update unit 199 may update a specific function module by comparing the installation information with the module information of the pre-registered function module.

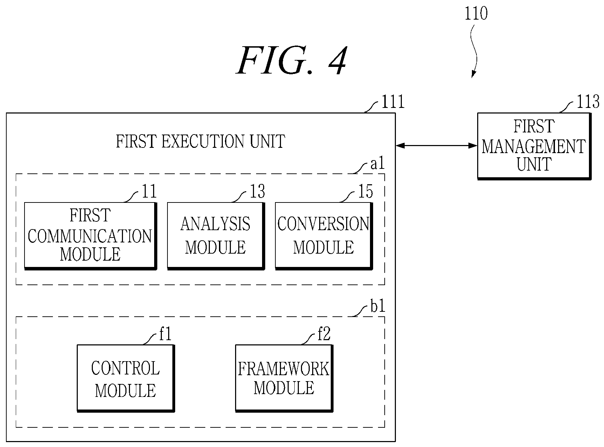

FIG. 4 is a schematic diagram illustrating the controller 110.

The controller 110 may be referred to as a "management device" that manages a function module in terms of installing the function module and deleting the installed function module.

The controller 110 may include a first execution unit 111 and a first management unit 113.

The first execution unit 111 may be equipped with a function module that assigns a specific function to the hardware 90. The first execution unit 111 may control the hardware 90 by executing the function module. The first execution unit 111 may include various processors, each of which has a function module installed therein for execution.

The first management unit 113 may manage a variable change module among the function modules installed in the first execution unit 111. The first management unit 113 may be formed separately from the first execution unit 111. Alternatively, the first management unit 113 may correspond to one of the function modules installed and executed in the first execution unit 111.

The function module installed in the first execution unit 111 may be divided into a change module b1 and a fixed module a1 fixedly installed in the first execution unit 111.

The first management unit 113 may add or delete the change module b1 with the fixed module a1 kept as it is. The fixed module a1 may include a module that remains and operates in the controller when the change module b1 is added to or deleted from the controller. In this case, it is noted that the fixed module a1 is updatable.

In this case, the fixed module a1 may include at least one of a first communication module 11 in communication with the manager 120 or the market server 190, an analysis module 13 for interpreting the hardware control information generated by the control module, and a conversion module 15 for converting the control information interpreted by the analysis module 13 to be compatible with the hardware 90.

The change module b1 may include at least one of a control module f1 that generate control information and a framework module f2. The framework module f2 may connect or link a screen module f3, which includes a user interface such as the display menu tm in FIG. 3, to the control module f1.

The first communication module 11 may communicate with the manager 120 or the market server 190. The first execution unit 111 may be provided with a communication device in communication with the manager 120 or the market server 190 in a wired/wireless manner. In this case, the first communication module 11 may convert different types of information according to the communication format required by the communication device or may control the communication device.

The first communication module 11 may transmit the control module f1 or the framework module f2, which are received from the manager 120 or directly obtained from the market server 190, to the first management unit 113. In this case, the first management unit 113 may install the control module f1 or the framework module f2 in the first execution unit 111. If necessary, before the above control module or framework module is installed, the first management unit 113 may delete the pre-installed control module or framework module.

The first communication module 11 may transmit a control command, received from the manager 120, to the pre-installed control module. The control module may generate control information and control signals for controlling the hardware 90 in response to the control command. The control information may be transmitted to the above-mentioned analysis module 13.

The analysis module 13 may interpret or calculate the control information of the hardware 90. The control information generated by the control module is designated by each company and may be different from the information required by the manufacturer of the hardware 90. For example, the control information generated by the control module may allow the end effector of the robot to move by a set distance in a set direction. In order to apply the above control information to the actual robot, the movement of each joint of the robot must be defined to complete the movement. In this case, the control information to move the end effector by the set distance in the set direction may be interpreted as robot-friendly and realistic information to rotate the joint equipped with the end effector by the set angle by the analysis module 13.

It is best that the analysis module 13 is provided by the manufacturer of the hardware 90 in reality. Therefore, it is preferable that the analysis module 13 have the status of the fixed module a1 that cannot be changed by the company.

The conversion module 15 may convert the control information interpreted by the analysis module 13 to be compatible with the hardware 90. For example, the control information to rotate the joint equipped with the end effector by the set angle may be expressed in a different format according to the hardware 90 of each manufacturer.

If the control information is transmitted to the first hardware 90, the control information must be converted into a first format supported by the first hardware 90. Similarly, if the control information is transmitted to the second hardware 90, the control information must be converted into a second format supported by the second hardware 90. This format conversion may be performed by the conversion module 15. In this case, the conversion module 15 may use the "conversion dynamic linking library" described above.

As a result, the conversion module 15 may convert the result of control operation of the analysis module 13 into a third-party program and provide an environment for controlling third-party hardware.

According to the analysis module 13 and the conversion module 15, the control module produced by a company other than the manufacturer of the hardware 90 may be normally used to control the hardware 90. Alternatively, even if the hardware 90 is changed to that of another manufacturer, an environment may be provided to control the hardware of another manufacturer using the existing control information without any problem.

The first management unit 113 may add or delete another function module to or from the first execution unit 111 in a state in which the first communication module 11, the analysis module 13, and the conversion module 15 are kept as they are. From a different point of view, the second management unit 123 may be interpreted as not having the authority to delete the fixed module a1 including the first communication module 11, the analysis module 13, and the conversion module 15.

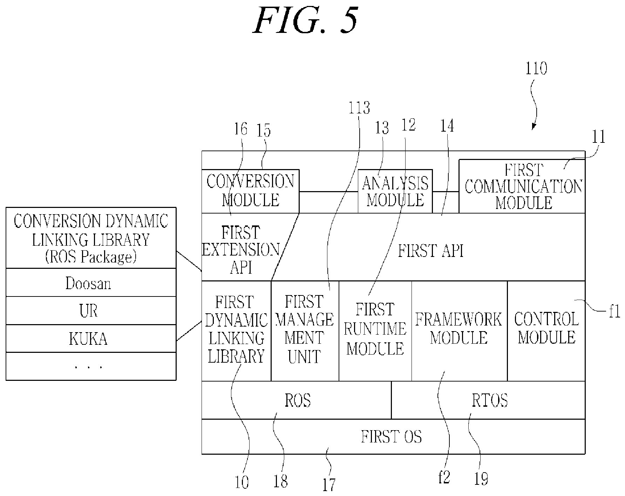

FIG. 5 is a schematic diagram illustrating the software structure installed in the controller 110.

The first execution unit 111 may be additionally equipped with at least one of a first operating system (OS) 17, a robot operating system (OS), and a real-time operating system (RTOS) 19 that provides real-time to the first OS 17 or the robot OS.

The first execution unit 111 may be additionally equipped with at least one of a first runtime module corresponding to the execution environment of the function module and a first application program interface (API) 14 connecting the function module to the first runtime module 12.

The above first OS 17, robot OS, real-time OS, first runtime module 12, and first API 14 may correspond to a type of fixed module.

The first execution unit 111 may be equipped with a first communication module 11, an analysis module 13, a conversion module 15, a control module f1, a framework module f2, a first runtime module 12, and a first API 14, a first extension API 16, and a first dynamic linking library 10. The control module f1 and the framework module f2 may include a first extension API 16 and a second dynamic linking library 20, or may be formed separately from the first extension API 16 and the second dynamic linking library 20.

The first management unit 113 may add or delete the first extension API 16 or the first dynamic linking library 10, which is distinguished from the control module f1 and the framework module f2, to or from the first execution unit 111.

The first runtime module 12 may provide an execution environment of the function module f (specifically, the framework module f2 and the control module f1 constituting the function module f). The first API 14 may connect or link the function module f (specifically, the framework module f2 and the control module f1 constituting the function module f) to the first runtime module 12.

The first dynamic linking library 10 may be produced by the manufacturer of the hardware 90 for the purpose of controlling the hardware 90. The first extension API 16 may connect or link the first dynamic linking library 10 to the first runtime module 12.

The control module f1 may include control information for controlling the hardware 90 to have a specific function. The framework module f2 may include information for interworking the screen module with the control module. In this case, the first management unit 113 may install, in the first execution unit 111, the framework module f2 and the control module f1 among the screen module f3, the framework module f2, and the control module f1.

The first communication module 11 may receive the control module f1 and the framework module f2 from the manager 120. The first management unit 113 may install, in the first execution unit 111, the control module f1 and the framework module f2 received through the first communication module 11.

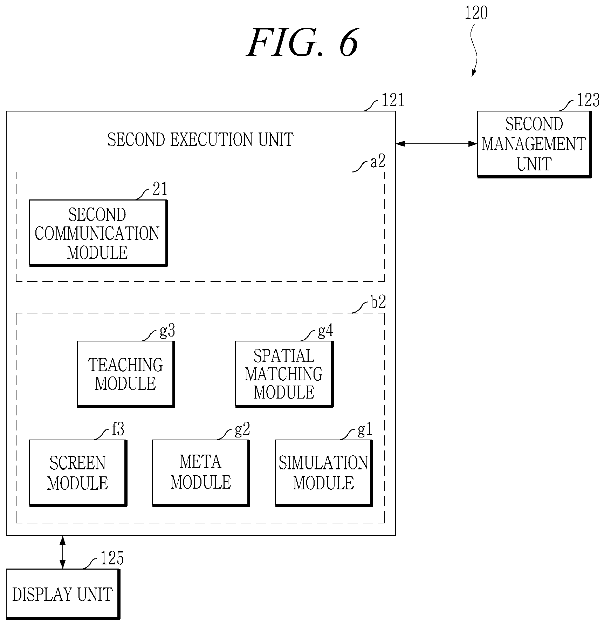

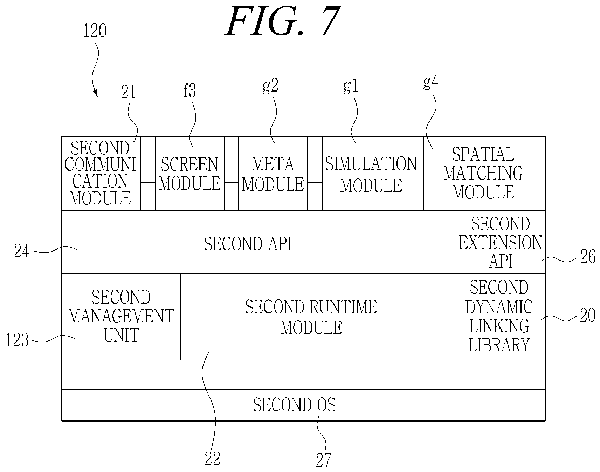

FIG. 6 is a schematic diagram illustrating the manager 120. FIG. 7 is a schematic diagram illustrating the software structure installed in the manager 120.

The manager 120 may be referred to as a "management device" in terms of managing the separate extraction of detailed modules included in the function module so that some are installed and the others are transmitted to the controller 110.

The manager 120 may include a second execution unit 121, a second management unit 123, and a display unit 125.

The second management unit 123 may acquire a function module f that assigns a specific function to the hardware 90.

The second management unit 123 may distinguish the screen module f3, the framework module f2, and the control module f1 included in the function module f downloaded from the market server 190.

The second execution unit 121 may display a user interface indicative of the specific function of the function modules f.

The second execution unit 121 may be equipped with a second communication module 21 in communication with the first communication module 11 and a screen module f3 extracted by the second management unit 123. The manager 120 may communicate with the controller 110 through the pre-installed second communication module 21. The second communication module 21 may exchange interworking information between the hardware 90 and the user interface with the controller 110.

The second management unit 123 may transmit the control module f1 and the framework module f2 to the first management unit 113 through the second communication module 21.

The first management unit 113 may install, in the first execution unit 111, the control module f1 and the framework module f2 received from the second management unit 123.

The screen module f3 may display the user interface interworking with the control module f1 by the framework module f2 on the display unit 125 of the manager 120. Accordingly, the user interface UI may be displayed on the display unit 125 such as a display.

The first and second communication modules 11 and 21 may exchange interworking information between the user interface and the control module f1.

Meanwhile, the first and second communication modules 11 and 21 may be formed integrally. In addition, the first and second execution units 111 and 121 may be formed integrally. The first and second management units 113 and 123 may be formed integrally.

The second execution unit 121 may be equipped with a second operating system (OS) 27 (e.g., iOS, windows, or MacOS), a second runtime module corresponding to the execution environment of the function module f, and a second application program interface (API) 24 connecting the function module f to the second runtime module 22.

The second management unit 123 may extract the screen module f3 providing the user interface from the function module f.

The second management unit 123 may install or delete the screen module f3 in or from the second execution unit 121 in a state in which the second OS 27, the second runtime module 22, and the second API 24 are kept as they are. In this case, the second OS 27, the second runtime module 22, and the second API 24 may correspond to a type of fixed module a2. On the other hand, the screen module f3 may correspond to the change module b2.

The second management unit 123 may divide the function module f into a first module and a second module.

The second module includes at least one of a screen module f3 including a user interface, a simulation module g1 for generating a simulation environment of the hardware 90, a meta module g2 connecting the screen module f3 to the simulation module g1, a teaching module g3 for generating teaching information of the hardware 90, and a spatial matching module g4 for providing augmented reality. The simulation module g1, the meta module g2, the teaching module g3, and the spatial matching module g4 may correspond to the change module b2.

The first module may include at least one of a control module f1 that processes control information for controlling the hardware 90 to have a specific function, and a framework module f2 that includes information for linking the screen module f3 to the control module f1.

The second management unit 123 may provide the first module to the controller 110 for the hardware 90.

The second management unit 123 may install or delete the second module in or from the second execution unit 121. In other words, the second management unit 123 may divide the element included in the function module into the first module to be provided to the controller 110 and the second module to be installed in the manager 120.

In more detail, the second management unit 123 may extract the screen module f3 having the user interface from the function module f.

The second management unit 123 may install the screen module f3 in the second execution unit 121.

The second execution unit 121 may display the user interface UI on the display unit 125 by executing the screen module f3 installed by the second management unit 123.

The second execution unit 121 may be equipped with a second communication module 21, a screen module f3, a second runtime module, a second application program interface (API) 24, a second extension API 26, and a second dynamic linking library 20. The screen module f3 may include the second extension API 26 and the second dynamic linking library 20, or may be formed separately from the second extension API 26 and the second dynamic linking library 20.

The second management unit 123 may add or delete the second extension API 26 or the second dynamic linking library 20, which is distinguished from the screen module f3, to or from the second execution unit 121.

The second communication module 21 may communicate with the controller 110 or the market server 190 in a wired/wireless manner.

When the screen module f3 is executed by the second execution unit 121, the user interface may be displayed on the display unit 125.

The second runtime module 22 may provide an execution environment of the function module f (specifically, the screen module f3 constituting the function module f). The runtime module may refer to a library or program of basic code used by a specific compiler or virtual machine to manage the program.

The second API 24 may connect the function module f to the second runtime module 22.

The second dynamic linking library 20 may be a program produced by the manufacturer of the hardware 90 for the purpose of controlling the hardware 90.

The second extension API 26 may connect the second dynamic linking library 20 to the second runtime module 22.

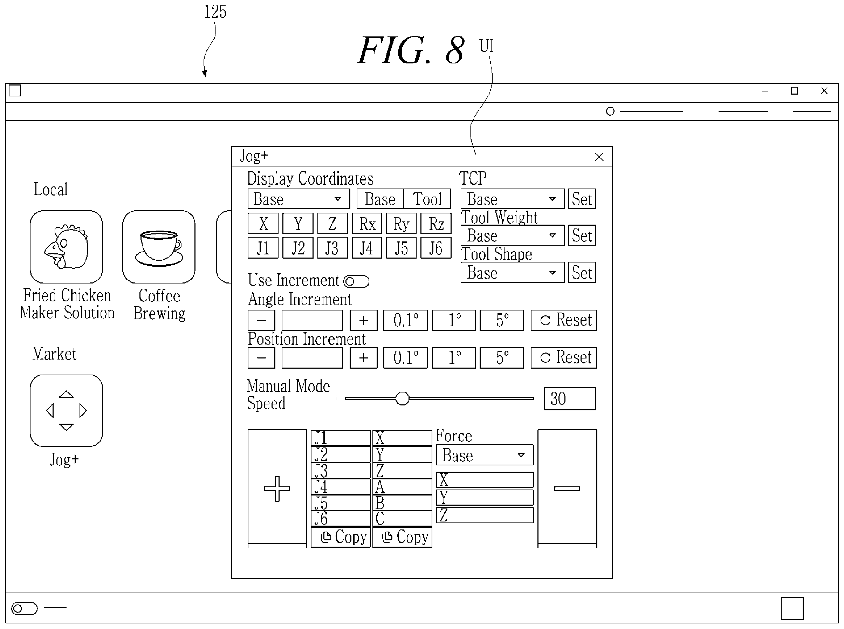

FIG. 8 is a schematic diagram illustrating an example of the user interface displayed through the display unit 125.

As an example, the display menu tm in FIG. 3 may indicate a screen in which the function module f called "Jog+" is selected.

The Jog+ module may provide a jogging function that allows the customer to conveniently move the robot using a pop-up screen. The customer who accesses the market server 190 through the manager 120 may select and install a Jog+ module from the tiled menu provided by the market server 190.

When the installation is executed, the screen module included in the Jog+ module may be installed in the manager 120 through the second management unit 123. The framework module and control module included in the Jog+ module may be transmitted to the controller 110 through the second communication module 21, and may be installed in the controller 110 through the first management unit 113 of the controller 110. When the installation is completed, an icon named "Jog+" may be newly displayed on the user interface corresponding to the display menu of the display unit 125.

When the customer selects and executes "Jog+" displayed through the display unit 125 of the manager 120, the user interface UI including a menu for controlling the robot may be displayed on the display unit 125, as illustrated in FIG. 8.

The angle of each joint, such as a robot arm, constituting the robot may be adjusted by selecting "+", "-", and/or the like included in the UI. The selection information of the control icon such as "+" may interwork with the framework module f2 and the control module f1 installed in the controller 110 through the second communication module 21. The control module f1 may generate control information targeting an actual robot. The control information may be interpreted through the analysis module 13 and converted through the conversion module 15 to provide the same to the robot. The actual robot may move in response to the reception of the control information converted through the conversion module 15.

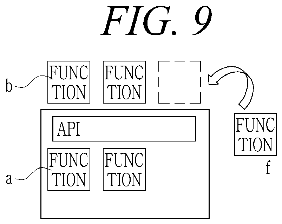

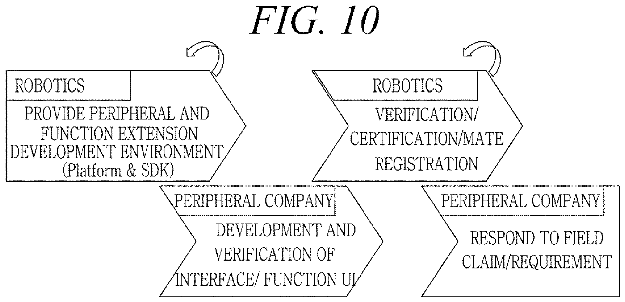

FIG. 9 is a schematic diagram illustrating an operation of the management system 100 according to the present disclosure. FIG. 10 is a schematic diagram illustrating a work area between the manufacturer of the hardware 90 and the manufacturer of the function module in the environment to which the management system 100 of the present disclosure is applied.

The management system 100 described above may include the manager 120 that displays a user interface for controlling the hardware 90.

The manager 120 may extract the screen module f3 and the control module f1 from the function module f acquired from the market server 190.

The manager 120 may install the screen module f3 on the second API 24 with the self-contained second API 24 kept as it is. The second API 24 may correspond to a fixed module a that is fixedly maintained regardless of addition or deletion of the function module.

The manager 120 may transmit, to the controller 110, the control module f1 to be installed on the first API 14 that is pre-installed in the controller 110 of the hardware 90.

According to the above manager 120, an environment may be provided in which the function module f having the control module f1, the framework module f2, and the screen module f3 is added or deleted with respect to the manager 120 or the controller 110. The screen module, the framework module, and the control module may correspond to the change module b that is added or deleted when a new function is assigned thereto.

The fixed module a may be divided into a module a1 installed in the controller 110 and a module a2 installed in the manager 120. The change module b may be divided into a module b1 installed in the controller 110 and a module b2 installed in the manager 120.

When "Robotics", which is the manufacturer of the robot, provides a peripheral and function extension development environment (platform & SDK), various peripheral companies may develop and verify a function module that assigns a new function to the robot manufactured by "Robotics".

"Robotics" may re-verify the interface function UI and function module developed by each company and certify the function module with no problem in the result of verification. In addition, "Robotics" may establish a cooperative relationship with the company that provides the certified function module (mate registration).

Each company may respond to field issues, such as field claims and requirements.

In connection with the above work area, the manufacturer of the hardware 90 may entrust the development, verification, and response of the function module to a peripheral company, a software company, or the like. As a result, the manufacturer of the hardware 90 may focus more on the development of different types of hardware. In addition, each company may exclude the development of the hardware 90 and focus only on the improvement and update of its function module.

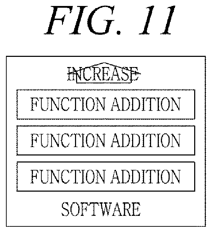

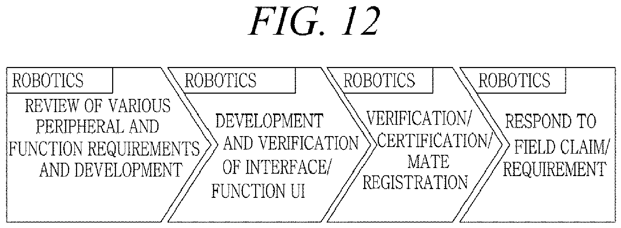

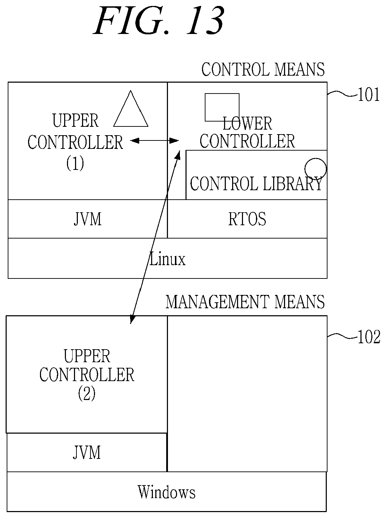

FIG. 11 is a schematic diagram illustrating an operation in a comparative example. FIG. 12 is a schematic diagram illustrating a work area of the manufacturer of the hardware 90 in an environment in the comparative example. FIG. 13 is a schematic diagram illustrating a software structure in the comparative example.

In the comparative example, it is impossible to form the management system 100 because there is no function module that is separated from the basic program and includes a screen module, a framework module, and a control module.

In the comparative example, since there is no concept of a function module including a screen module, a framework module, and a control module, a single-piece basic program in which a specific function is fused to the robot OS, runtime module, and API provided by the manufacturer is installed in the control means 101 of the hardware 90. As a result, when a new function is added, it is necessary to modify the robot OS, the runtime module, and even the API. In addition, a management means 102 provided with a display may also be configured such that an OS such as Windows, a Java virtual machine, and a specific function are fused into one piece.

Thus, it is impossible to add or delete only the function part to or from the basic program installed in the robot. Therefore, it is impossible for other companies to develop the function module without knowing the code of the basic program related to security and stability. As a result, only the manufacturer of the hardware 90 must be entirely in charge of adding the new function, which may mean that resources are distributed to the development of the new function in addition to the development of the hardware 90.

In other words, "Robotics", the manufacturer of the hardware 90, should identify various peripheral and function requirements, and review the need to develop a function that meets those peripheral/requirements. In addition, if the need for development is recognized, the interface/function UI should be directly developed and verified. The function module that has been verified may be verified and certified again. In addition, "Robotics" must directly respond to various field issues. Consequently, according to the comparative example, "robotics" must directly perform all procedures such as preliminary research, customer service, development, verification, and supplementation in relation to addition of new functions. For this reason, "robotics" consumes a lot of resources and requires a long period of time to add new functions. In addition, in the process of adding functions, it is necessary to modify the basic program as a whole, which also increases the possibility of sporadic errors. Therefore, detecting and resolving these errors require a lot of time.

For customers, it is necessary to bear the inconvenience of time since it takes a long time to add functions. Furthermore, the reliability of "Robotics" may be deteriorated due to various errors caused by the addition of new functions.

The basic program in the comparative example is composed of two software processes: an upper controller (in charge of screen functions) and a lower controller (in charge of framework and control functions).

The basic program is in a first form of the "upper controller (1)", which is the upper controller (for Linux), and the lower controller, or in a second form of the "upper controller (2)", which is the upper controller (for Windows provided by Microsoft), and the lower controller, which is provided to the customer.

The upper controller is a Java application (JAVA App) and is driven in a Java virtual machine (JVM). The lower controller is driven in a real time operating system (RTOS) 19 for real-time. The control library is composed of a static library to be included when building a lower controller.

In the comparative example, the addition or change of the function may be performed when only the upper controller is changed (triangle), when only the lower controller is changed (square), and/or when only the control library is changed (circle). Realistically, these changes may occur in a combination of separated cases (2^3 = 8 types). Currently, in response to all cases, the software version is distributed by combining the entire upper controller/lower controller.

Even if only one line of the basic program is changed, the entire software must be created and distributed, and customers cannot use various functions while waiting for this time.

Problems (errors, etc.) according to the change must be directly corrected by the manufacturer, which may also amplify the above-mentioned burden on the manufacturer and inconvenience to customers.

According to the comparative example, due to problems such as source security and version control, there is no way for an external company to develop and add a new function, and the manufacturer of the hardware 90 must directly add a new function.

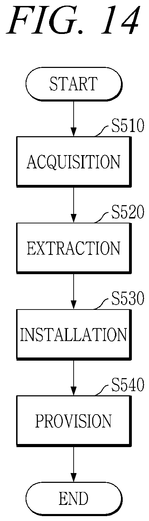

FIG. 14 is a flowchart illustrating a management method according to the present disclosure.

The management method in FIG. 14 may be performed by the management system 100 of FIG. 1 or the manager 120 of FIG. 6.

The management method may include an acquisition step S510, an extraction step S520, an installation step S530, and a provision step S540. The acquisition step S510, the extraction step S520, the installation step S530, and the provision step S540 may be performed by the second management unit 123.

The acquisition step S510 may acquire the function module f from the market server 190.

The extraction step S520 may extract the screen module f3 and the control module f1 included in the function module f.

The installation step S530 may install the screen module on the pre-installed second API 24.

The provision step S540 may transmit, to the controller 110, the control module to be installed on the first API 14 that is pre-installed in the controller 110 of the hardware 90.

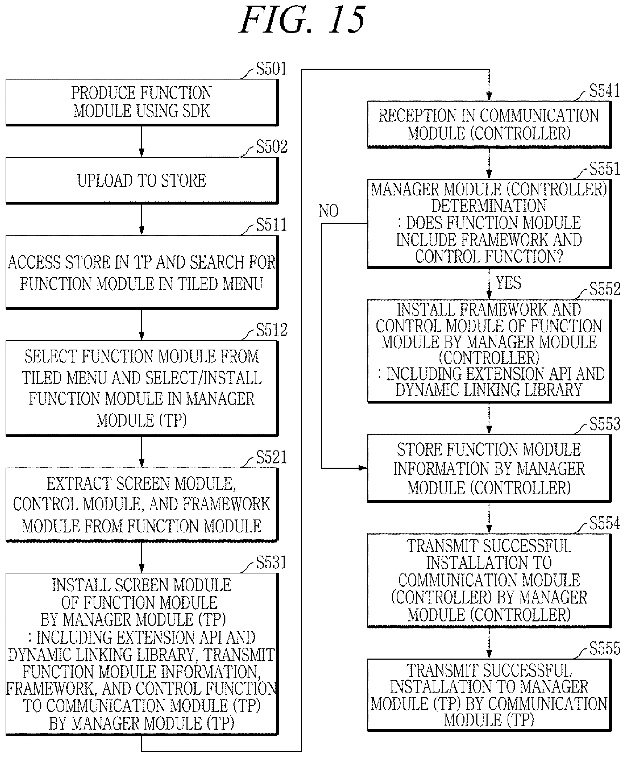

FIG. 15 is a flowchart illustrating the installation process of the function module.

The "communication module (controller)" illustrated in the drawings may refer to a communication module provided in the controller 110, that is, a first communication module 11. The "communication module (TP)" illustrated in the drawings may refer to a communication module provided in the manager 120, that is, a second communication module 21.

The "manager module (controller)" illustrated in the drawings may refer to a manager module provided in the controller 110 or a first management unit 113. The "manager module (TP)" illustrated in the drawings may refer to a manager module provided in the manager 120 or a second management unit 123.

According to the management system, various companies may develop and produce a function module, and may upload the produced function module to the market server. The function module uploaded to the market server may be downloaded and installed for the robots manufactured by various robot manufacturers.

Each company may produce the function module f using a function development tool, e.g., SDK provided by the manufacturer (S501). The SDK may include a function module production kit composed of an API and a tool.

The company may upload the produced function module f to a "store" corresponding to the market server 190 (S502).

The customer may access the store through a TP corresponding to the manager 120 ("TP" in FIG. 15 refers to the manager) and may search for the function module f in the tiled menu (S511).

When the customer selects a specific function module from the tiled menu, the function module may be installed in the "manager module (TP)" corresponding to the second management unit 123 (S512).

The manager module (TP) may extract a screen module, a control module, and a framework module from the function module (S521).

The manager module (TP) may install the screen module included in the function module in the controller 110 (S531). The manager module (TP) may additionally install a first extension API 16 and a first dynamic linking library 10 in the controller 110. The manager module (TP) may transmit the function module information, the framework module, and the control module to the communication module (TP) corresponding to the second communication module 21.

The communication module (TP) may transmit the function module information, the framework module, and the control module to the controller 110.

The "communication module (controller)" corresponding to the first communication module 11 provided in the controller 110 may receive the function module information, the framework module, and the control module (S541).

The "manager module (controller)" corresponding to the first management unit 113 may determine whether the information received from the manager 120 includes the framework module and the control module (S551).

If it is determined that the framework module and the control module are included, the manager module (controller) may install the framework module and the control module in the controller 110 (S552). The manager module (controller) may additionally install the first extension API 16 and the first dynamic linking library 10 in the controller 110 as necessary.

Then, the manager module (controller) may store the function module information received from the manager 120 (S553).

If it is determined in the determination step S551 that the framework module and the control module are not included in the information received from the manager 120, the step of storing the function module information (S553) may be performed immediately.

When the framework module and the control module are installed in the controller 110 and the function module information is stored in the controller 110, the manager module (controller) may transmit the fact of successful installation to the communication module (controller) (S554). The communication module (controller) may transmit the fact of successful installation to the communication module (TP).

The communication module (TP) may transmit the fact of successful installation to the manager module (TP) (S555). The manager module (TP) may display the fact of successful installation through the display unit 125 of the manager 120.

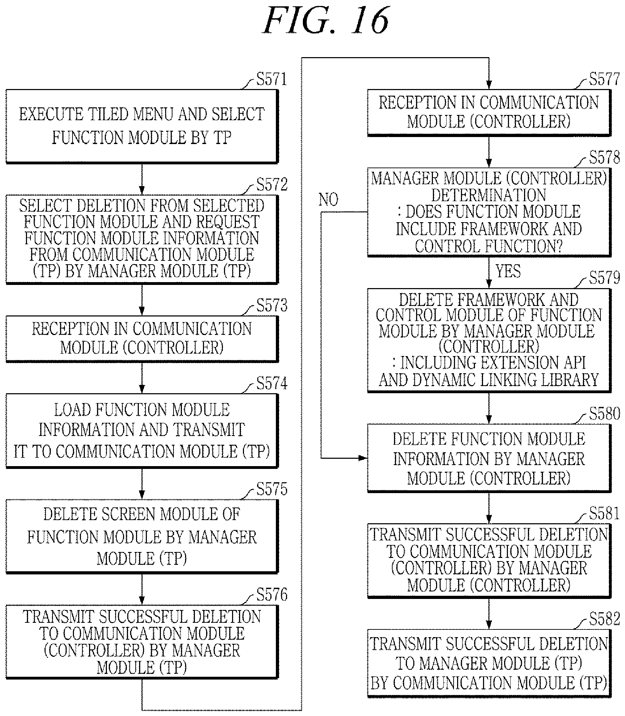

FIG. 16 is a flowchart illustrating the deletion process of the function module.

The TP corresponding to the manager 120 may display the tiled menu of the function module installed in the controller 110, and may select a specific function module (S571).

When "deletion" is selected from the related menu of the selected function module, the manager module (TP) corresponding to the second management unit 123 may request the function module information from the communication module (TP) corresponding to the second communication module 21 (S572). The function module information may include identification information of the function module. Using the identification information may identify or grasp the function module installed in the controller 110.

The requested information may be transmitted to the communication module (controller) corresponding to the first communication module 11 by the communication module TP (S573).

The manager module (controller) that has received the requested information through the communication module (controller) may load the pre-stored function module information and transmit it to the communication module (TP) (S574).

The communication module (TP) may transmit the function module information to the manager module (TP). The transmission of the function module information to the manager module (TP) through the communication module (TP) may mean that the function module is installed in the controller 110. The manager module (TP) may delete the screen module of the function module from the manager 120 (S575).

The manager module (TP) may transmit the fact of successful deletion to the communication module (controller) (S576).

If the communication module (controller) receives the fact of successful deletion (S577), the received fact of successful deletion may be transmitted to the manager module (controller).

The manager module (controller) may determine whether the framework module and the control module are included in the function module having the deleted screen module or in the function module requested to be deleted (S578).

If it is determined that the framework module and the control module are included, the manager module (controller) may delete the framework module and the control module (S579). The manager module (controller) may delete the first extension API 16 and the first dynamic linking library 10 as necessary.

The manager module (controller) may delete the pre-stored function module information (identification information) after the deletion of the framework module and the control module (S580).

The manager module (controller) may transmit the fact that the framework module, the control module, and the identification information are deleted to the communication module (controller) (S581).

The communication module (controller) may transmit the fact of deletion to the communication module (TP), and the communication module (TP) may transmit the fact of deletion to the manager module (TP) (S582). The manager module (TP) may display the fact that the function module is removed through the display unit 125.

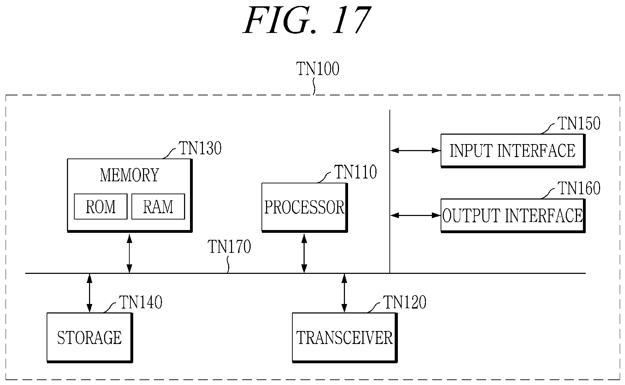

FIG. 17 is a diagram illustrating a computing system according to an embodiment of the present disclosure. The computing device, which is designated by reference numeral TN100 in FIG. 17, may be a device described herein (e.g., the management system 100, the market server 190, the controller 110, or the manager 120).

In the embodiment of FIG. 17, the computing device TN100 may include at least one processor TN110, a transceiver TN120, and a memory TN130. The computing device TN100 may further include a storage TN140, an input interface TN150, an output interface TN160, and so on. The components included in the computing device TN100 may be connected by a bus TN170 to communicate with each other.

The processor TN110 may execute a program command stored in at least one of the memory TN130 and the storage TN140. The processor TN110 may refer to a central processing unit (CPU), a graphics processing unit (GPU), or a dedicated processor for performing the methods according to the embodiments of the present disclosure. The processor TN110 may be configured to implement procedures, functions, and methods in connection with the embodiment of the present disclosure. The processor TN110 may control each component of the computing device TN100.

Each of the memory TN130 and the storage TN140 may store different types of information related to the operation of the processor TN110. Each of the memory TN130 and the storage TN140 may be at least one of a volatile storage medium and a non-volatile storage medium. For example, the memory TN130 may be at least one of a read only memory (ROM) and a random access memory (RAM).

The transceiver TN120 may transmit or receive a wired signal or a wireless signal. The transceiver TN120 may be connected to a network for communication.

Meanwhile, the embodiments of the present disclosure is not implemented only through the system and/or method described so far, but may be implemented through a program for realizing the function corresponding to the configuration of the embodiment of the present disclosure or a recording medium in which the program is recorded. This may be easily implemented by those skilled in the art to which the present disclosure pertains from the above description.

As is apparent from the above description, the management system of the present disclosure may manage the screen module, the control module, and the framework module included in the function module separately when obtaining the function module that assigns a specific function to the hardware.

For example, the management system may install the screen module in the manager operated by the user, and may install the control module and the framework module in the controller for the hardware.

The screen module may be installed in the manager with the OS, API, runtime module, etc., installed in the manager kept as they are. The control module and the framework module may be installed in the controller with the OS, API, runtime module, etc., installed in the controller kept as they are.

In other words, the management system of the present disclosure may install specific function modules in the controller and manager for the hardware by installing the screen module of the function module in the manager and installing the control module and the framework module of the function module in the controller. Alternatively, the management system may delete the specific function modules from the controller and the manager by deleting the screen module from the manager and deleting the control module and the framework module from the controller.

The specific function modules installed in the controller and manager may control the robot so that the hardware has new functions.

According to the present disclosure, when the function module includes the screen module, the control module, and the framework module, it is possible to assign or delete a specific function to or from the hardware such as a robot or an AMR regardless of the manufacturer of the function module.

According to the present disclosure, it is possible to produce various function modules through various software development platforms, software development kits (SDKs), or the like within the range that the function module includes the screen module, the control module, and the framework module.

This may mean that various peripheral companies and software companies that are not related to hardware manufacturers, controller manufacturers, and manager manufacturers can also produce function modules that assign new functions to the hardware.

According to the development environment of such function modules, various functions may be quickly provided to customers using hardware. In addition, the development load of the function module focused on the manufacturer of the hardware may be distributed to various hardware manufacturers, various controller manufacturers, various manager manufacturers, and various software companies.

According to the present disclosure, an environment may be provided in which a problem for each function of the hardware is solved by the provider of the function module having a function. In other words, an environment may be provided in which a problem response is possible for each function of the hardware rather than an integrated problem response of the hardware. This may mean that an independent problem solving environment is provided for each function assigned to the hardware.

Since the provider of the function module has to exclude other hardware problems and only focus on improving the problems of the function module provided by the provider, the stability of the function module may also be improved. This allows hardware customers to use certain newly added functions stably for existing hardware.

Although the specific embodiments have been described with reference to the drawings, the present disclosure is not limited thereto. It will be apparent to those skilled in the art that various changes and modifications may be made without departing from the spirit and scope of the disclosure as defined in the following claims.

## Claims

1. A management system comprising: when there is provided a controller configured to control hardware,
a market server having a function module registered therein to assign a specific function to the hardware; and
a manager configured to download the function module from the market server, wherein the manager installs or deletes the function module in or from the controller.

2. A management system comprising:
a registration unit configured to register a function module that assigns a specific function to hardware; and
a provision unit configured to provide a manager with module information of a pre-registered function module.

3. The management system according to claim 2, wherein:
the provision unit provides the manager with a display menu that displays the module information in a tiled menu structure; and
when a specific tile forming the tiled menu is selected, the provision unit further provides the manager with at least one of a function classification result and detailed information of a specific function module disposed on the selected specific tile.

4. The management system according to claim 2, wherein:
a collection unit is provided to collect information of a second extension application programming interface (API) installed in the manager;
a search unit is provided to search for second function modules each having a second dynamic linking library using the second extension API from among a plurality of pre-registered function modules; and
the provision unit provides the manager with a list of the second function modules searched for by the search unit.

5. The management system according to claim 2, wherein:
a collection unit is provided to collect information of a first extension application programming interface (API) installed in a controller managed by the manager;
a search unit is provided to search for first function modules each having a first dynamic linking library using the first extension API from among a plurality of pre-registered function modules; and
the provision unit provides the manager with a list of the first function modules searched for by the search unit.

6. The management system according to claim 2, wherein:
an evaluation unit is provided to assign a score to the function module using at least one of a customer evaluation score, the number of downloads, and process convenience for the function module;
if there are a plurality of types of module information provided to the controller, the provision unit determines a priority based on the score assigned to each function module; and
the provision unit provides the manager with the plurality of types of module information arranged in order according to the priority.

7. The management system according to claim 2, wherein:
a collection unit is provided to collect installation information of a specific function module installed in the manager; and
an update unit is provided to update the specific function module by comparing the installation information with the module information of the pre-registered function module.

8. A management system comprising:
a first execution unit equipped with function modules, each of which assigns a specific function to hardware, and configured to control the hardware by executing the function module; and
a first management unit configured to manage a variable change module among the function modules installed in the first execution unit.

9. The management system according to claim 8, wherein:
the function module installed in the first execution unit is divided into the change module and a fixed module fixedly installed in the first execution unit; and
the first management unit adds or deletes the change module with the fixed module kept as it is.

10. The management system according to claim 9, wherein:
the fixed module comprises at least one of a first communication module in communication with a manager or a market server, an analysis module configured to interpret control information of the hardware, and a conversion module configured to convert the control information interpreted by the analysis module to be compatible with the hardware; and
the change module comprises at least one of a control module configured to generate the control information and a framework module connecting the control module to a screen module comprising a user interface.

11. The management system according to claim 8, wherein:
there are provided a first communication module in communication with a manager or a market server, an analysis module configured to interpret control information of the hardware, and a conversion module configured to convert the control information interpreted by the analysis module to be compatible with the hardware; and
the first management unit adds or deletes another function module to or from the first execution unit in a state in which the first communication module, the analysis module, and the conversion module are kept as they are.

12. The management system according to claim 8, wherein:
the first execution unit is additionally equipped with at least one of a first operating system (OS), a robot operating system (OS), and a real-time operating system (RTOS) configured to provide real-time to the first OS or the robot OS; and
the first execution unit is additionally equipped with at least one of a first runtime module corresponding to an execution environment of the function module and a first application program interface (API) connecting the function module to the first runtime module.

13. The management system according to claim 8, wherein:
the first execution unit is equipped with a first communication module, an analysis module, a conversion module, a control module, a framework module, a first runtime module, a first application program interface (API), a first extension API, and a first dynamic linking library;
the first management unit adds or deletes the first extension API or the first dynamic linking library, which is distinguished from the control module and the framework module, to or from the first execution unit;
the first communication module communicates with a manager or a market server;
the analysis module interprets control information of the hardware;
the conversion module converts the control information interpreted by the analysis module to be compatible with the hardware;
the control module generates the control information;
the framework module connects the control module to a screen module comprising a user interface;
the first runtime module provides an execution environment of the function module;
the first API connects the function module to the first runtime module;
the first dynamic linking library is produced for the purpose of controlling the hardware by the manufacturer of the hardware; and
the first extension API connects the first dynamic linking library to the first runtime module.

14. The management system according to claim 8, wherein:
the function module comprises a screen module, a framework module, and a control module;
the screen module comprises a user interface;
the control module comprises control information for controlling the hardware to have the specific function;
the framework module comprises information for interworking the screen module with the control module; and
the first management unit installs, in the first execution unit, the framework module and the control module among the screen module, the framework module, and the control module.

15. The management system according to claim 8, wherein:
a first communication module is provided to communicate with a manager for displaying a user interface of the functional module;
the first communication module receives, from the manager, a control module configured to generate control information of the hardware that allows the hardware to have the specific function, and a framework module for interworking the control module with the user interface; and
the first management unit installs, in the first execution unit, the control module and the framework module received through the first communication module.
